Europäisches Patentamt

(19) European Patent Office

Office européen des brevets

(11) Numéro de publication: **0 297 260 B1**

(12) **FASCICULE DE BREVET EUROPEEN**

(45) Date de publication du fascicule du brevet: **30.01.91**

(21) Numéro de dépôt: **88107795.2**

(22) Date de dépôt: **14.05.88**

(51) Int. Cl.⁵: **F 16 K 31/126, F 16 K 17/06**

(54) Soupape de retenue et de détente commandée par fluide.

(30) Priorité: **06.06.87 EP 87108238**

(43) Date de publication de la demande:
**04.01.89 Bulletin 89/01**

(45) Mention de la délivrance du brevet:
**30.01.91 Bulletin 91/05**

(84) Etats contractants désignés:
**AT BE CH DE ES FR GB GR IT LI NL SE**

(56) Documents cités:
**FR-A-2 409 436**
**GB-A-1 095 127**
**US-A-1 884 810**
**US-A-3 529 622**

(73) Titulaire: **SOCIETE DES PRODUITS NESTLE S.A.**
**Case postale 353**
**CH-1800 Vevey (CH)**

(72) Inventeur: **Löliger, Willi**
**Buchwaldstrasse 6**
**CH-3510 Konolfingen (CH)**
Inventeur: **Schmied, Rudolf**
**Flurweg 4**
**CH-3510 Konolfingen (CH)**

Courier Press, Leamington Spa, England.

EP 0 297 260 B1

## Description

L'invention se rapporte à une soupape de retenue et de détente commandée par fluide pour le réglage automatique de la pression d'un liquide, notamment par exemple dans une installation de traitement thermique, un pasteurisateur ou un stérilisateur à ultra haute température.

Dans les pasteurisateurs et stérilisateurs à ultra haute température, on élève rapidement la température du liquide à traiter, on maintient cette température pendant une courte durée dans un tube d'attente, puis on abaisse rapidement la température par détente dans une chambre à pression réduite. Un dispositif de retenue du liquide est nécessaire à la sortie de l'installation de manière à maintenir la pression dans le tube d'attente à une valeur constante supérieure à la pression d'ébullition du liquide et à éviter ainsi l'apparition d'un courant à deux phases, liquide et vapeur, ce qui rendrait impossible le réglage du temps d'attente. Cette contre-pression étant liée à la température du traitement thermique, elle doit être supérieure à la pression de vapeur saturante du liquide à cette température. Avantageusement, le dispositif de retenue peut également servir de moyen de détente du liquide vers la chambre à pression réduite.

Pour remplir ce double rôle, on utilise habituellement une simple buse d'expansion. Avec ce dispositif, la contre-pression est proportionnelle au carré du débit. C'est dire qu'il est particulièrement sensible aux variations de débit, mais également à la température, au gradient de température résultant de la détente et à la viscosité du liquide à traiter. L'encrassement de l'ajutage de la buse consécutif à de longs cycles de production accentue ces effets négatifs. Durant les cycles de nettoyage, il est souhaitable que le débit de produit de nettoyage soit supérieur au débit normal de production. En fait, suivant ses caractéristiques constructives, une buse d'expansion de ce type n'est adaptée qu'à une plage très étroite de débits et températures ainsi qu'au type de liquide à traiter. On a cherché à améliorer les performances des buses en les allongeant tout en augmentant le diamètre de leur ajutage, de telle sorte que la détente commence au sein même de la buse. Avec une buse de ce type, la contre-pression augmente linéairement avec le débit, ce qui fait qu'elle peut être utilisée dans une gamme plus étendue de débits. Cependant, ni l'une ni l'autre ne convient dans la phase de mise en route des stérilisateurs en continu comprenant de longs temps d'attente de l'ordre de 2 à 15 min. Durant la période de montée en température du tube d'attente que l'on remplit d'eau sans qu'intervienne de détente, les buses permettent un débit trop élevé de liquide, la contre-pression qu'elles assurent étant insuffisante. Il se forme alors un courant à deux phases, la chambre d'expansion se remplit d'eau froide et les appareils de contrôle de la température et des niveaux ne fonctionnent plus correctement.

Un autre type de dispositif de retenue est constitué par un régulateur de pression à membrane qui contrôle une soupape à l'aide d'une cheville de soupape s'appuyant du côté réglé de la membrane et d'une vis qui règle la tension d'un ressort s'appuyant du côté réglant de la membrane. Le cas échéant, le ressort peut être remplacé ou supplié par un fluide sous pression du côté réglant comme c'est le cas par exemple dans le US-A-2335.250. Les soupapes à ressort doivent être réglées souvent. Les chevilles des soupapes ont tendance à se bloquer lors du travail à haute température. Le passage entre la soupape et son siège est étroit et s'encrasse facilement. A l'équilibre, les pressions au dessus et en dessous de la membrane sont identiques. La réponse de la soupape aux variations de pression est assurée par une membrane élastique de surface relativement grande, donc fragile. De plus il n'y a pas d'orifice d'évacuation du liquide assurant une détente.

Un autre type de soupape connu pour le réglage de la pression d'un liquide est pourvu d'un diaphragme de grande surface portant une double membrane enchâssée dans une bague annulaire et renforcée par des secteurs métalliques. Ce diaphragme est traversé par une tige évidée à son extrémité pour ménager des orifices de sortie du liquide. La pression sur la membrane du côté réglant est assurée par de l'air comprimé. En régime de travail, les pressions sont égales des deux côtés de la membrane. Une telle soupape convient jusqu'à environ 120°C. Au delà, elle devient instable et tend à "pomper". Le diaphragme se déforme et la soupape devient rapidement inutilisable. Par ailleurs, elle n'est pas conçue pour être reliée au vide. Enfin, les types de soupape à membrane décrits précédemment ne répondent pas aux conditions de sécurité hygiénique recherchées dans le travail aseptique. Leur construction, en particulier au voisinage des zones de fixation de la membrane rend certaines parties difficilement accessibles aux agents de nettoyage.

GB-A-1,095,127 concerne une soupape de régulation de la pression d'un fluide à diaphragme. Ce dispositif comporte une chambre inférieure traversée par un fluide munie à sa sortie d'une soupape d'écoulement et une chambre supérieure séparée de la chambre inférieure par un diaphragme. Une cheville de commande de la soupape est assujettie au diaphragme en son centre. La chambre supérieure contient un fluide de régulation de la pression. Ce dispositif ne répond qu'à de faibles variations de pression et ne peut donc fonctionner que pour un débit de fluide à traiter relativement constant. De plus, la soupape n'est conduite que par la membrane: elle n'est guidée ni au niveau du siège, ni dans le compartiment supérieur. De ce fait, elle ne pourrait pas résister longtemps aux sollicitations mécaniques auxquelles elle serait soumise dans une installation de traitement thermique.

L'invention se propose de remédier aux inconvénients des dispositifs connus en mettant à disposition une soupape à membrane pour la retenue et la détente des liquides devant être traités thermiquement, qui soit de construction simple et compacte et dont la membrane résiste à des conditions d'utilisation prolongées, dans une plage étendue de débits, qui soit guidée au niveau du siège et du compartiment supérieur, et qui ne présente pas de risque de contamination des liquides traités par le fluide réglant même dans le cas d'un manque d'étanchéité de la membrane.

La soupape selon l'invention comprend un corps délimitant une première chambre traversée par le liquide ayant un orifice d'entrée et un orifice de sortie pour le raccordement respectivement à un tube d'attente et à une chambre de détente et une seconde chambre séparée hermétiquement de la première par une membrane souple, ladite seconde chambre recevant un fluide de commande, et une cheville guidée évidée à son extrémité proche de l'orifice de sortie, solidaire de la membrane et coulissant dans l'orifice de sortie entre deux positions extrêmes, de manière à l'obturer dans sa position première et à laisser passer le liquide dans sa position opposée.

Elle est caractérisée par le fait

que la cheville est guidée à son extrémité située dans la seconde chambre par un coussinet dans un orifice du corps de soupape,

que la soupape comporte un capuchon couvrant la cheville dont l'intérieur est en communication par un canal avec la seconde chambre, de sorte que la pression du fluide de commande s'exerce sur la membrane et sur la face supérieure de la cheville et

que la surface active de la membrane du côté du liquide est inférieure à la surface active de la membrane du côté du fluide de commande de manière à maintenir la pression du liquide à une valeur supérieure à celle du fluide de commande indépendamment du débit du liquide afin d'éviter un risque de contamination du liquide par le fluide de commande même dans le cas d'un manque d'étanchéité de la membrane.

L'invention sera mieux comprise à la lecture de la description détaillée ci-après d'un mode de réalisation de la soupape représenté au dessin annexé à titre d'exemple.

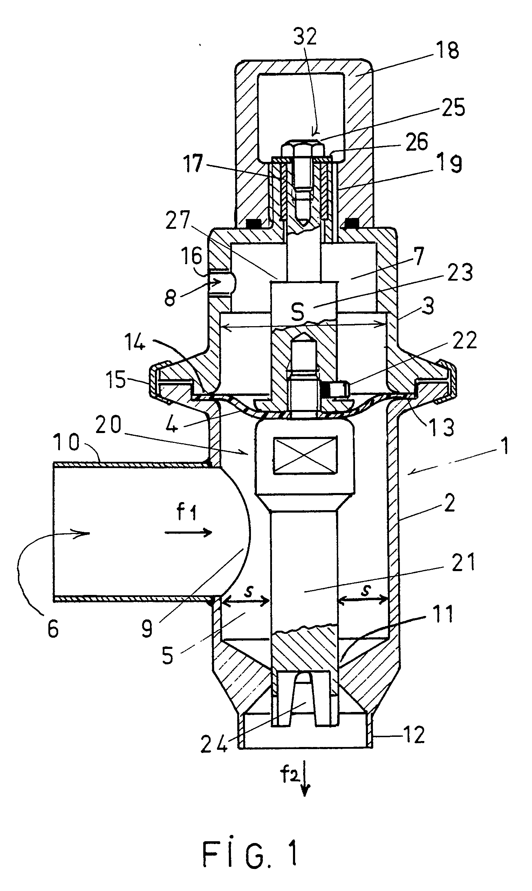

La figure 1 est une coupe longitudinale de la soupape et

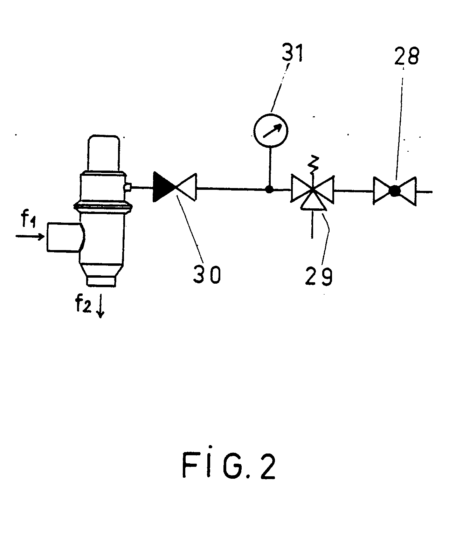

La figure 2 est une vue schématique des moyens de réglages associés au fluide de commande.

La soupape comprend un corps cylindrique 1 en deux parties (2, 3) séparées par une membrane 4 délimitant respectivement une chambre 5 de passage du liquide réglé 6 et une chambre 7 occupée par le fluide réglant 8, par exemple l'air. Le liquide entre dans la chambre 5 par l'orifice latéral 9 depuis le tube d'attente 10 selon la flèche f1. Le corps 2 est percé à son extrémité inférieure par un passage 11 se rétrécissant puis s'évasant, en forme de tore à section trapézoïdale.

Le passage 11 sert à la fois de siège de soupape, de sortie pour le liquide (suivant la flèche f2) et de bague de guidage pour la cheville de soupape comme il sera expliqué plus loin. Le passage est prolongé par une jupe 12 débouchant dans une chambre à pression réduite non représentée, qui peut être par exemple le vase d'expansion d'un stérilisateur ou le corps d'un évaporateur à film tombant. Le corps 2 est pourvu à son extrémité supérieure d'une gorge 13 sur laquelle vient s'emboîter un épaulement 14 à la partie inférieure du corps 3. La membrane 4 est pincée à sa périphérie entre la gorge 13 et l'épaulement 14. Les deux parties du corps de la soupape sont serrées par un collier 15. Dans le corps 3 est ménagé un orifice latéral 16 d'entrée du fluide réglant. A sa partie supérieure, le corps 3 comporte un coussinet 17 de guidage de la cheville de soupape, sur lequel est fixé un capuchon 18, par exemple par vissage. La chambre 7 communique avec l'intérieur du capuchon par un canal 19.

La membrane 4 est percée en son centre et traversée par la cheville de soupape 20. La cheville 20 comporte une partie mâle 21 sur laquelle est fixée, par exemple par vissage, puis bloquage par la vis 22, une partie femelle 23. La membrane 4 est pincée entre les deux parties de la cheville. La partie mâle 21 est évidée à son extrémité inférieure et comporte des orifices 24 de forme allongée permettant la sortie du liquide réglé. Elle peut coulisser dans la bague de guidage 11.

De préférence, la partie mâle 21 de la cheville et le corps 2 ne comportent aucun angle vif de manière que toutes les pièces présentes dans la chambre 5 puissent être accessibles aux agents de nettoyage et de stérilisation. La partie femelle 23 de la cheville coulisse dans le coussinet 17. Le débattement de la cheville 20 et par conséquent les positions extrêmes des orifices 24 de sortie du liquide sont réglés, d'une part par l'intermédiaire du boulon 25 portant une rondelle 26, vissé à la partie femelle 23, et d'autre part par un épaulement 27 de la partie femelle 23, rondelle 26 et épaulement 27 venant buter contre le corps 3. La membrane 4 est de préférence en un matériau souple, de bonne résistance mécanique et thermique, par exemple en polytétrafluoréthylène. Le corps 2 et la partie mâle de la cheville 21 qui sont en contact avec le liquide sont de préférence en acier inoxydable chromé.

Le fonctionnement de la soupape est le suivant: on amène de l'air comprimé à partir d'une source à environ 6 bar par une vanne de retenue 28 via une vanne de régulation de pression 29 dans la chambre 7. La vanne 29 assure le réglage de la pression de l'air entre 0,5 et 6 bar. Une vanne positive 30 entre la chambre 7 et la vanne 29 permet d'éviter un retour des fluides depuis la chambre 7. Un manomètre 31 indique la pression dans la chambre 7. L'air comprimé à la pression choisie, par exemple 3,7 bar, agit sur la face supérieure de la membrane 4, ce qui fait descendre la cheville et ferme la soupape. La pression du liquide amené dans la chambre 5 augmente alors jusqu'à atteindre et maintenir une valeur équilibrant la pression de l'air, par exemple 4,2 bar, pression qui est supérieure d'environ 0,5 bar à la pression de vapeur saturante à la température de stérilisation, environ 140°C.

Dès que la pression augmente dans le tube d'attente, celle-ci agit sur la face inférieure de la membrane 4, ce qui fait monter la cheville, ouvre la soupape et libère une certaine quantité de liquide vers la chambre de détente. Simultanément, la pression diminue dans le tube d'attente jusqu'à la valeur d'équilibre choisie.

Une particularité essentielle de la soupape selon l'invention est que, dans une plage étendue de débits de liquide traité, par exemple de 2000 à 15000 1/h, la pression du liquide est toujours supérieure d'environ 0,5-0,6 bar à celle de l'air comprimé. Ceci est dû au fait qu'à l'équilibre, le produit de la pression par la surface active de membrane est constant des deux côtés de la membrane. On entend par "surface active" la surface totale sur laquelle le fluide agit. Ainsi, du côté réglant, la surface active est la section intérieure inférieure du corps 3, soit S, puisque l'air agit également sur la face supérieure 32 de la cheville 20 du fait du passage communiquant entre l'intérieur du capuchon et la chambre 7. Par contre, du côté réglé, la surface active est la section s de l'espace annulaire entre le corps 2 et la cheville 20. Cette différence de pression en faveur du liquide à traiter est très intéressante pour le travail dans des conditions stériles: elle permet d'éviter tout risque de contamination du produit et du stérilisateur par l'air non stérile même en cas d'un défaut d'étanchéité de la membrane. Dans un tel cas, la vanne positive 30 éviterait par ailleurs une pénétration du liquide ou des agents de nettoyage ou de stérilisation dans le circuit d'air comprimé. De plus, la différence de pression n'exerce aucune contrainte mécanique sur la membrane.

La soupape peut être nettoyée en place à grand débit, par exemple jusqu'à 2 à 3 fois le débit normal de production par exemple par rinçage à l'eau, avec une solution d'alcali, puis une solution d'acide, puis stérilisée, par exemple à l'eau surchauffée. On diminuera alors avantageusement la pression de l'air.

Un autre avantage très important de la soupape selon l'invention est que les niveaux de pression du côté réglant et du côté réglé de la membrane, peuvent être modifiés au cours même d'un cycle de fonctionnement, de nettoyage ou de stérilisation.

Elle peut être montée avec le corps vertical ou horizontal, sans inconvénient.

La soupape selon l'invention peut être utilisée dans le traitement des produits liquides devant être pasteurisés ou stérilisés, par exemple les émulsions ou les dispersions, dans le domaine alimentaire ou en dehors de celui-ci. Elle est particulièrement avantageuse dans une installation de stérilisation à ultra haute température pour produits laitiers.

Bien entendu, elle peut être utilisée comme simple soupape de retenue en l'absence d'un quelconque traitement thermique de pasteurisation ou de stérilisation.

**Revendications**

1. Soupape de retenue et de détente commandée par fluide, pour le réglage automatique de la pression d'un liquide (6), notamment dans une installation de traitement thermique, comprenant un corps délimitant une première chambre (5) traversée par le liquide ayant un orifice d'entrée (9) et un orifice de sortie (11) pour le raccordement respectivement à un tube d'attente et à une chambre de détente et une seconde chambre (7) séparée hermétiquement de la première par une membrane souple (4), ladite seconde chambre (7) recevant un fluide de commande (8), et une cheville (20) guidée évidée à son extrémité proche de l'orifice de sortie (11) solidaire de la membrane (4) et coulissant dans l'orifice de sortie (11) entre deux positions extrêmes, de manière à l'obturer dans sa position première et à laisser passer le liquide dans sa position opposée, caractérisée par le fait

que la cheville (20) est guidée à son extrémité située dans la seconde chambre (7) par un coussinet (17) dans un orifice du corps de soupape (3),

que la soupape comporte un capuchon (18) couvrant la cheville (20) dont l'intérieur est en communication par un canal (19) avec la seconde chambre (7), de sorte que la pression du fluide de commande (8) s'exerce sur la membrane (4) et sur la face supérieure (32) de la cheville (20) et

que la surface active (s) de la membrane (4) du côté du liquide (6) est inférieure à la surface active (S) de la membrane du côté du fluide de commande (8) de manière à maintenir pendant le fonctionnement la pression du liquide (6) à une valeur supérieure à celle du fluide de commande (8) indépendamment du débit du liquide (6) afin d'éviter un risque de contamination du liquide (6) par le fluide de commande (8) même dans le cas d'un manque d'étanchéité de la membrane (4).

2. Soupape selon la revendication 1, caractérisée par le fait que la première (5) et la deuxième chambre (7) sont de forme cylindrique.

3. Soupape selon l'une des revendications 1 et 2, caractérisée par le fait que les niveaux de pression de part et d'autre de la membrane (4) peuvent être réglés au cours du fonctionnement.

4. Installation de stérilisation à ultra haute température comportant une soupape selon la revendication 1.

**Patentansprüche**

1. Fluidgesteuertes Druckminder-Rückschlagventil zur automatischen Regelung des Druckes einer Flüssigkeit (6), insbesondere in einer thermischen Behandlungsanlage, mit einem Körper, der eine erste Kammer (5), die von der Flüssigkeit durchströmt ist und eine Einlaßöffnung (9) sowie eine Auslaßöffnung (11) zum Anschluß an ein Einlaßrohr bzw. an eine Entspannungskammer aufweist, und eine von der ersten Kammer durch eine weiche Membrane (4) hermetisch abgetrennte zweite Kammer (7) begrenzt, wobei die zweite Kammer (7) ein Steuerfluid (8) aufnimmt, und mit einem geführten, an seinem der Auslaßöffnung (11) zugewandten Ende ausgehöhlten Stift (20), der mit der Membrane (4) verbunden ist und in der Auslaßöffnung (11) zwischen zwei Endstellungen derart gleitet, daß er in seiner ersten Stellung diese verschließt und in seiner entgegengesetzten Stellung die Flüssigkeit durchläßt, dadurch gekennzeichnet, daß

der Stift (20) an seinem in der zweiten Kammer (7) gelegenen Ende mittels eines Lagers (17) in einer Öffnung des Ventilkörpers (3) geführt ist,

daß das Ventil eine den Stift (20) abdeckende Kappe (18) aufweist, deren Inneres über einen Kanal (19) mit der zweiten Kammer (7) in Verbindung steht, so daß der Druck des Steuerfluids (8) auf die Membrane (4) und auf die obere Seite (32) des Stiftes (20) wirkt, und

daß die aktive Oberfläche (s) der Membrane (4) auf der Seite der Flüssigkeit (6) kleiner als die aktive Oberfläche (S) der Membrane auf der Seite des Steuerfluids (8) ist, so daß während des Betriebes der Druck der Flüssigkeit (6) auf einem Wert höher als derjenige des Steuerfluids (8) gehalten wird, unabhängig vom Durchsatz der Flüssigkeit (6), um die Gefahr einer Verunreinigung der Flüssigkeit (6) durch das Steuerfluid (8) selbst im Falle mangelnder Dichtheit der Membrane (4) zu vermeiden.

2. Ventil nach Anspruch 1, dadurch gekennzeichnet, daß die erste Kammer (5) und die zweite Kammer (7) zylinderförmig sind.

3. Ventil nach einem der Ansprüche 1 und 2, dadurch gekennzeichnet, daß die Druckpegel zur einen und zur anderen Seite der Membrane (4) während des Betriebes geregelt werden können.

4. Ultrahochtemperatur-Sterilisationsanlage mit einem Ventil nach Anspruch 1.

**Claims**

1. A fluid-controlled back-pressure and expansion valve for the automatic regulation of the pressure of a liquid (6), more especially in a heat-treatment installation, comprising a body defining a first chamber (5) traversed by the liquid having an inlet orifice (9) and an outlet orifice (11) for connection to a holding tube and to an expansion chamber, respectively, and a second chamber (7) hermetically separated from the first by a flexible membrane (4), said second chamber (7) receiving a control fluid (8), and a guided pin (20) hollowed out at its end near the outlet orifice (11) integral with the membrane (4) and sliding in the outlet orifice (11) between two end positions so as to block the orifice in its first position and to allow the liquid to pass through in its opposite position, characterized in that

at its end situated in the second chamber (7), the pin is guided by a bearing (17) in an orifice of the valve body (3),

the valve comprises a cap (18) covering the pin (20) of which the interior communicates with the second chamber (7) through a channel (19) so that the pressure of the control fluid (8) is applied to the membrane (4) and to the upper face (32) of the pin (20) and

the active surface (s) of the membrane (4) on the side of the liquid (6) is smaller than the active surface (S) of the membrane on the side of the control fluid (8) to keep the pressure of the liquid (6) during operation at a value above that of the control fluid (8) irrespective of the throughflow of the liquid (6) to avoid any risk of contamination of the liquid (6) by the control fluid (8), even in the event of a leak in the membrane (4).

2. A valve as claimed in claim 1, characterized in that the first chamber (5) and the second chamber (7) are cylindrical in shape.

3. A valve as claimed in claim 1 or 2, characterized in that the pressure levels on each side of the membrane (4) can be adjusted during operation.

4. An ultra-high-temperature sterilizing installation comprising the valve claimed in claim 1.

FİG. 1

FIG. 2